# EUROPEAN PATENT APPLICATION

(11) **EP 4 776 187 A1**
(43) Date of publication of application: **15.07.2026**
(21) Application number: 24885949.8
(22) Date of filing: 25.06.2024
(51) Int. Cl.: G06N 3/098, G06N 3/096

(54) **FEDERATED LEARNING APPARATUS AND METHOD**

(30) Priority: 02.11.2023 KR 20230150392
(71) Applicant: LG Electronics Inc., Yeongdeungpo-gu Seoul 07336 (KR)
(72) Inventor: KIM, Minjung, Seoul 06772 (KR); KIM, Byounghoon, Seoul 06772 (KR); KIM, Kokeun, Seoul 06772 (KR)
(74) Representative: Schott, Jakob Valentin
(86) International application number: PCT/KR2024/008751
(87) International publication number: WO 2025/095267

(57) **Abstract**

The present disclosure relates to a federated learning apparatus and method capable of efficiently training neural network models of a server and clients based on a local adapter, including at least one client that generates a multi modal feature based on a first neural network model including a first global adapter and a local adapter, and a server that generates a task action corresponding to the multi modal feature based on a second neural network model including a second global adapter and provides the task action to the client, wherein the server collects the trained local adapter from the client, retrains the second global adapter of the second neural network model based on the collected local adapter, and distributes the retrained second global adapter to the client to update the first global adapter of the client with the retrained second global adapter.

## Description

### [Technical Field]

The present disclosure relates to an apparatus and method for federated learning capable of efficiently training neural network models of a server and clients based on a local adapter.

### [Background Art]

In general, artificial intelligence refers to a field of computer science and information technology that studies methods for enabling computers to perform thinking, learning, self-development, and the like that can be performed with human intelligence, meaning enabling computers to mimic intelligent behavior of humans.

In addition, artificial intelligence does not exist by itself, but is directly or indirectly related to many other fields of computer science. In particular, in modern times, attempts to introduce artificial intelligence elements in various fields of information technology and utilize them to solve problems in those fields are being made very actively.

Training of an artificial intelligence model requires numerous computer resources to perform large-scale computations. Cloud computing services are the best solution that can easily provide computing infrastructure so that artificial intelligence models can be trained without complex hardware and software installation.

Since cloud computing is based on centralization of resources, all data needed must be stored in cloud memory and utilized for model training. Data centralization provides many advantages from the perspective of maximizing efficiency, but there is a risk of leakage of users' personal data, and in particular, this is becoming an increasingly important business issue as data transmission increases.

Recently, to overcome these problems, many learning algorithms to support federated learning systems and federated learning architectures are being introduced.

Federated learning is a learning method in which, rather than collecting users' personal data in a central server for training, models trained based on users' personal data at clients are aggregated centrally.

However, in such federated learning, since the server and clients have deep learning networks of the same structure while having a dualized model structure, when a model is retrained on the client, as the downstream task input of the server changes, problems may occur in the overall task performance.

Therefore, in the future, it is necessary to develop a federated learning apparatus capable of efficiently training neural network models of the server and clients and providing various services.

### [Disclosure]

### [Technical Problem]

The present disclosure is aimed at solving the above-mentioned problems and other problems.

The present disclosure is aimed at providing a federated learning apparatus and method capable of efficiently training neural network models of a server and clients so that both common characteristics in various real environments and individual unique characteristics are reflected, by training a local adapter of a client, retraining a global adapter of the server based on the trained local data, and distributing a retrained second global adapter to the client.

### [Technical Solution]

A federated learning apparatus according to an embodiment of the present disclosure includes at least one client that generates a multi modal feature based on a first neural network model including a first global adapter and a local adapter, and a server that generates a task action corresponding to the multi modal feature based on a second neural network model including a second global adapter and provides the task action to the client, wherein the server collects the trained local adapter from the client, retrains the second global adapter of the second neural network model based on the collected local adapter, and distributes the retrained second global adapter to the client to update the first global adapter of the client with the retrained second global adapter.

A federated learning method of a federated learning apparatus including at least one client that generates a multi modal feature based on a first neural network model including a first global adapter and a local adapter, and a server that generates a task action corresponding to the multi modal feature based on a second neural network model including a second global adapter and provides the task action to the client, the method comprising: retraining, by the client, the local adapter of the first neural network model based on at least one of local data and global data; transmitting, by the client, the retrained local adapter to the server; collecting, by the server, the retrained local adapter from the client; retraining, by the server, the second global adapter of the second neural network model based on the collected local adapter; distributing, by the server, the retrained second global adapter to the client; receiving, by the client, the retrained second global adapter from the server; and updating, by the client, the first global adapter of the first neural network model based on the retrained second global adapter.

### [Advantageous Effects]

According to an embodiment of the present disclosure, a federated learning apparatus can efficiently train neural network models of a server and clients so that both common characteristics in various real environments and individual unique characteristics are reflected, by training a local adapter of a client, retraining a global adapter of the server based on the trained local data, and distributing a retrained second global adapter to the client.

In addition, the present disclosure can train neural network models of each client and the global neural network model of the server to maintain alignment with each other, thereby improving task performance, by the server distributing the retrained second global adapter and retraining resources together to the client.

### [Description of Drawings]

FIG. 1 illustrates an artificial intelligence apparatus according to an embodiment of the present disclosure.
FIG. 2 illustrates an artificial intelligence server according to an embodiment of the present disclosure.
FIG. 3 illustrates an artificial intelligence system according to an embodiment of the present disclosure.
FIG. 4 is a drawing for explaining the operation of a federated learning apparatus according to an embodiment of the present disclosure.
FIG. 5 is a drawing for explaining a neural network model of a client of a federated learning apparatus according to an embodiment of the present disclosure.
FIG. 6 is a drawing for explaining a neural network model of a server of a federated learning apparatus according to an embodiment of the present disclosure.
FIG. 7 is a drawing for explaining a client operation of a federated learning apparatus according to an embodiment of the present disclosure.
FIG. 8 is a drawing for explaining a server operation of a federated learning apparatus according to an embodiment of the present disclosure.
FIG. 9 is a drawing for explaining the overall structure of a federated learning apparatus according to an embodiment of the present disclosure.
FIG. 10 is a drawing for explaining a global update process of a federated learning apparatus according to an embodiment of the present disclosure.
FIG. 11 is a drawing for explaining a local update process of a federated learning apparatus according to an embodiment of the present disclosure.
FIG. 12 is a drawing for explaining a multi modal-based service provision process of a federated learning apparatus according to an embodiment of the present disclosure.
FIGS. 13 to 15 are drawings for explaining embodiments of multi modal-based service application of a federated learning apparatus according to an embodiment of the present disclosure.
FIGS. 16 and 17 are drawings for explaining a server product and a client product of a federated learning apparatus according to an embodiment of the present disclosure.
FIGS. 18 to 20 are drawings for explaining a federated learning method of a federated learning apparatus according to an embodiment of the present disclosure.

### [Mode for Invention]

Hereinafter, embodiments disclosed in this specification will be described in detail with reference to the attached drawings. Regardless of reference numerals in the drawings, the same or similar components are given the same reference numbers and duplicate descriptions thereof will be omitted. The suffixes "module" and "unit" for components used in the following description are given or used interchangeably only in consideration of ease of writing the specification, and do not themselves have mutually distinct meanings or roles. In addition, in describing the embodiments disclosed in this specification, if it is determined that a detailed description of related known technology may obscure the gist of the embodiments disclosed in this specification, the detailed description will be omitted. In addition, the attached drawings are only for easy understanding of the embodiments disclosed in this specification, and the technical ideas disclosed in this specification are not limited by the attached drawings, and it should be understood to include all changes, equivalents, or substitutes included in the technical scope of the present disclosure.

Terms including ordinal numbers such as first and second may be used to describe various components, but the components are not limited by the terms. The terms are used only for the purpose of distinguishing one component from another component.

When a component is referred to as being "connected" or "coupled" to another component, it should be understood that it may be directly connected or coupled to the other component, but other components may also be present in between. On the other hand, when a component is referred to as being "directly connected" or "directly coupled" to another component, it should be understood that no other components are present in between.

The neural network, artificial neural network, and network function of the present disclosure may often be used interchangeably.

In addition, in the present disclosure, a neural network, a neural network, and a network function may be used with the same meaning. A neural network may be composed of a set of interconnected computational units that may be generally referred to as "nodes." These "nodes" may also be referred to as "neurons." A neural network is configured to include at least two or more nodes. Nodes (or neurons) constituting the neural networks may be interconnected by one or more "links."

### <Artificial Intelligence (AI)>

Artificial intelligence refers to the field of studying artificial intelligence or methodology for making artificial intelligence, and machine learning refers to the field of defining various issues dealt with in the field of artificial intelligence and studying methodology for solving the various issues. Machine learning is defined as an algorithm that enhances the performance of a certain task through a steady experience with the certain task.

An artificial neural network (ANN) is a model used in machine learning and may mean a whole model of problem-solving ability which is composed of artificial neurons (nodes) that form a network by synaptic connections. The artificial neural network can be defined by a connection pattern between neurons in different layers, a learning process for updating model parameters, and an activation function for generating an output value.

The artificial neural network may include an input layer, an output layer, and optionally one or more hidden layers. Each layer includes one or more neurons, and the artificial neural network may include a synapse that links neurons to neurons. In the artificial neural network, each neuron may output the function value of the activation function for input signals, weights, and deflections input through the synapse.

Model parameters refer to parameters determined through learning and include a weight value of synaptic connection and deflection of neurons. A hyperparameter means a parameter to be set in the machine learning algorithm before learning, and includes a learning rate, a repetition number, a mini batch size, and an initialization function.

The purpose of the learning of the artificial neural network may be to determine the model parameters that minimize a loss function. The loss function may be used as an index to determine optimal model parameters in the learning process of the artificial neural network.

Machine learning may be classified into supervised learning, unsupervised learning, and reinforcement learning according to a learning method.

The supervised learning may refer to a method of learning an artificial neural network in a state in which a label for learning data is given, and the label may mean the correct answer (or result value) that the artificial neural network must infer when the learning data is input to the artificial neural network. The unsupervised learning may refer to a method of learning an artificial neural network in a state in which a label for learning data is not given. The reinforcement learning may refer to a learning method in which an agent defined in a certain environment learns to select a behavior or a behavior sequence that maximizes cumulative compensation in each state.

Machine learning, which is implemented as a deep neural network (DNN) including a plurality of hidden layers among artificial neural networks, is also referred to as deep learning, and the deep learning is part of machine learning. In the following, machine learning is used to mean deep learning.

### <Robot>

A robot may refer to a machine that automatically processes or operates a given task by its own ability. In particular, a robot having a function of recognizing an environment and performing a self-determination operation may be referred to as an intelligent robot.

Robots may be classified into industrial robots, medical robots, home robots, military robots, and the like according to the use purpose or field.

The robot includes a driving unit may include an actuator or a motor and may perform various physical operations such as moving a robot joint. In addition, a movable robot may include a wheel, a brake, a propeller, and the like in a driving unit, and may travel on the ground through the driving unit or fly in the air.

### <Self-Driving>

Self-driving refers to a technique of driving for oneself, and a self-driving vehicle refers to a vehicle that travels without an operation of a user or with a minimum operation of a user.

For example, the self-driving may include a technology for maintaining a lane while driving, a technology for automatically adjusting a speed, such as adaptive cruise control, a technique for automatically traveling along a predetermined route, and a technology for automatically setting and traveling a route when a destination is set.

The vehicle may include a vehicle having only an internal combustion engine, a hybrid vehicle having an internal combustion engine and an electric motor together, and an electric vehicle having only an electric motor, and may include not only an automobile but also a train, a motorcycle, and the like.

At this time, the self-driving vehicle may be regarded as a robot having a self-driving function.

### <eXtended Reality (XR)>

Extended reality is collectively referred to as virtual reality (VR), augmented reality (AR), and mixed reality (MR). The VR technology provides a real-world object and background only as a CG image, the AR technology provides a virtual CG image on a real object image, and the MR technology is a computer graphic technology that mixes and combines virtual objects into the real world.

The MR technology is similar to the AR technology in that the real object and the virtual object are shown together. However, in the AR technology, the virtual object is used in the form that complements the real object, whereas in the MR technology, the virtual object and the real object are used in an equal manner.

The XR technology may be applied to a head-mount display (HMD), a head-up display (HUD), a mobile phone, a tablet PC, a laptop, a desktop, a TV, a digital signage, and the like. A device to which the XR technology is applied may be referred to as an XR device.

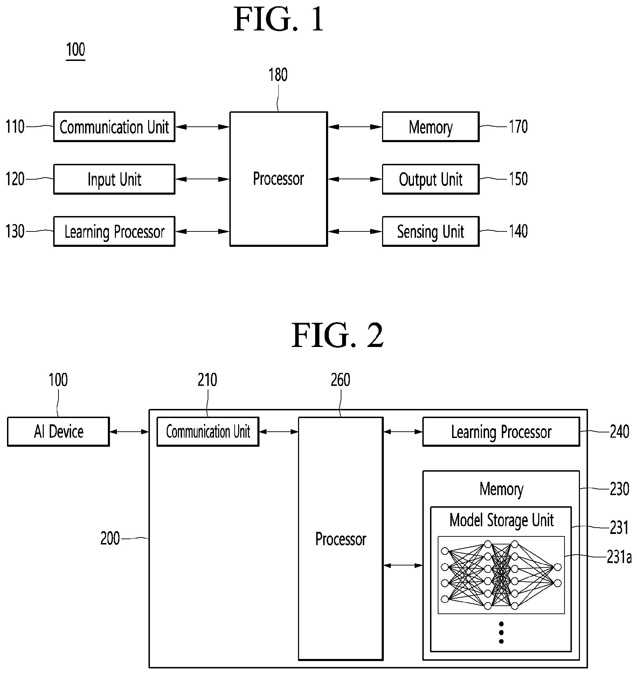

FIG. 1 illustrates an AI device 100 according to an embodiment of the present disclosure.

The AI device 100 may be implemented by a stationary device or a mobile device, such as a TV, a projector, a mobile phone, a smartphone, a desktop computer, a notebook, a digital broadcasting terminal, a personal digital assistant (PDA), a portable multimedia player (PMP), a navigation device, a tablet PC, a wearable device, a set-top box (STB), a DMB receiver, a radio, a washing machine, a refrigerator, a desktop computer, a digital signage, a robot, a vehicle, and the like.

Referring to FIG. 1, the AI device 100 may include a communication unit 110, an input unit 120, a learning processor 130, a sensing unit 140, an output unit 150, a memory 170, and a processor 180.

The communication unit 110 may transmit and receive data to and from external devices such as other AI devices 100a to 100e and the AI server 200 by using wire/wireless communication technology. For example, the communication unit 110 may transmit and receive sensor information, a user input, a learning model, and a control signal to and from external devices.

The communication technology used by the communication unit 110 includes GSM (Global System for Mobile communication), CDMA (Code Division Multi Access), LTE (Long Term Evolution), 5G, WLAN (Wireless LAN), Wi-Fi (Wireless-Fidelity), Bluetooth(TM), RFID (Radio Frequency Identification), Infrared Data Association (IrDA), ZigBee, NFC (Near Field Communication), and the like.

The input unit 120 may acquire various kinds of data.

At this time, the input unit 120 may include a camera for inputting a video signal, a microphone for receiving an audio signal, and a user input unit for receiving information from a user. The camera or the microphone may be treated as a sensor, and the signal acquired from the camera or the microphone may be referred to as sensing data or sensor information.

The input unit 120 may acquire a learning data for model learning and an input data to be used when an output is acquired by using learning model. The input unit 120 may acquire raw input data. In this case, the processor 180 or the learning processor 130 may extract an input feature by preprocessing the input data.

The learning processor 130 may learn a model composed of an artificial neural network by using learning data. The learned artificial neural network may be referred to as a learning model. The learning model may be used to infer a result value for new input data rather than learning data, and the inferred value may be used as a basis for determination to perform a certain operation.

At this time, the learning processor 130 may perform AI processing together with the learning processor 240 of the AI server 200.

At this time, the learning processor 130 may include a memory integrated or implemented in the AI device 100. Alternatively, the learning processor 130 may be implemented by using the memory 170, an external memory directly connected to the AI device 100, or a memory held in an external device.

The sensing unit 140 may acquire at least one of internal information about the AI device 100, ambient environment information about the AI device 100, and user information by using various sensors.

Examples of the sensors included in the sensing unit 140 may include a proximity sensor, an illuminance sensor, an acceleration sensor, a magnetic sensor, a gyro sensor, an inertial sensor, an RGB sensor, an IR sensor, a fingerprint recognition sensor, an ultrasonic sensor, an optical sensor, a microphone, a lidar, and a radar.

The output unit 150 may generate an output related to a visual sense, an auditory sense, or a haptic sense.

At this time, the output unit 150 may include a display unit for outputting visual information, a speaker for outputting auditory information, and a haptic module for outputting haptic information.

The memory 170 may store data that supports various functions of the AI device 100. For example, the memory 170 may store input data acquired by the input unit 120, learning data, a learning model, a learning history, and the like.

The processor 180 may determine at least one executable operation of the AI device 100 based on information determined or generated by using a data analysis algorithm or a machine learning algorithm. The processor 180 may control the components of the AI device 100 to execute the determined operation.

To this end, the processor 180 may request, search, receive, or utilize data of the learning processor 130 or the memory 170. The processor 180 may control the components of the AI device 100 to execute the predicted operation or the operation determined to be desirable among the at least one executable operation.

When the connection of an external device is required to perform the determined operation, the processor 180 may generate a control signal for controlling the external device and may transmit the generated control signal to the external device.

The processor 180 may acquire intention information for the user input and may determine the user's requirements based on the acquired intention information.

The processor 180 may acquire the intention information corresponding to the user input by using at least one of a speech to text (STT) engine for converting speech input into a text string or a natural language processing (NLP) engine for acquiring intention information of a natural language.

At least one of the STT engine or the NLP engine may be configured as an artificial neural network, at least part of which is learned according to the machine learning algorithm. At least one of the STT engine or the NLP engine may be learned by the learning processor 130, may be learned by the learning processor 240 of the AI server 200, or may be learned by their distributed processing.

The processor 180 may collect history information including the operation contents of the AI device 100 or the user's feedback on the operation and may store the collected history information in the memory 170 or the learning processor 130 or transmit the collected history information to the external device such as the AI server 200. The collected history information may be used to update the learning model.

The processor 180 may control at least part of the components of AI device 100 so as to drive an application program stored in memory 170. Furthermore, the processor 180 may operate two or more of the components included in the AI device 100 in combination so as to drive the application program.

FIG. 2 illustrates an AI server 200 according to an embodiment of the present disclosure.

Referring to FIG. 2, the AI server 200 may refer to a device that learns an artificial neural network by using a machine learning algorithm or uses a learned artificial neural network. The AI server 200 may include a plurality of servers to perform distributed processing, or may be defined as a 5G network. At this time, the AI server 200 may be included as a partial configuration of the AI device 100, and may perform at least part of the AI processing together.

The AI server 200 may include a communication unit 210, a memory 230, a learning processor 240, a processor 260, and the like.

The communication unit 210 can transmit and receive data to and from an external device such as the AI device 100.

The memory 230 may include a model storage unit 231. The model storage unit 231 may store a learning or learned model (or an artificial neural network 231a) through the learning processor 240.

The learning processor 240 may learn the artificial neural network 231a by using the learning data. The learning model may be used in a state of being mounted on the AI server 200 of the artificial neural network, or may be used in a state of being mounted on an external device such as the AI device 100.

The learning model may be implemented in hardware, software, or a combination of hardware and software. If all or part of the learning models are implemented in software, one or more instructions that constitute the learning model may be stored in memory 230.

The processor 260 may infer the result value for new input data by using the learning model and may generate a response or a control command based on the inferred result value.

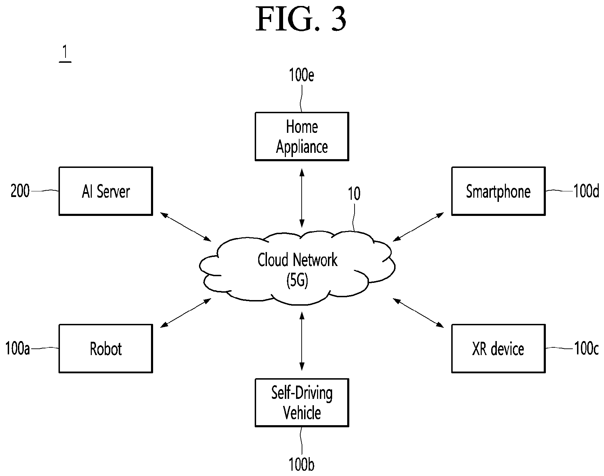

FIG. 3 illustrates an AI system 1 according to an embodiment of the present disclosure.

Referring to FIG. 3, in the AI system 1, at least one of an AI server 200, a robot 100a, a self-driving vehicle 100b, an XR device 100c, a smartphone 100d, or a home appliance 100e is connected to a cloud network 10. The robot 100a, the self-driving vehicle 100b, the XR device 100c, the smartphone 100d, or the home appliance 100e, to which the AI technology is applied, may be referred to as AI devices 100a to 100e.

The cloud network 10 may refer to a network that forms part of a cloud computing infrastructure or exists in a cloud computing infrastructure. The cloud network 10 may be configured by using a 3G network, a 4G or LTE network, or a 5G network.

That is, the devices 100a to 100e and 200 configuring the AI system 1 may be connected to each other through the cloud network 10. In particular, each of the devices 100a to 100e and 200 may communicate with each other through a base station, but may directly communicate with each other without using a base station.

The AI server 200 may include a server that performs AI processing and a server that performs operations on big data.

The AI server 200 may be connected to at least one of the AI devices constituting the AI system 1, that is, the robot 100a, the self-driving vehicle 100b, the XR device 100c, the smartphone 100d, or the home appliance 100e through the cloud network 10, and may assist at least part of AI processing of the connected AI devices 100a to 100e.

At this time, the AI server 200 may learn the artificial neural network according to the machine learning algorithm instead of the AI devices 100a to 100e, and may directly store the learning model or transmit the learning model to the AI devices 100a to 100e.

At this time, the AI server 200 may receive input data from the AI devices 100a to 100e, may infer the result value for the received input data by using the learning model, may generate a response or a control command based on the inferred result value, and may transmit the response or the control command to the AI devices 100a to 100e.

Alternatively, the AI devices 100a to 100e may infer the result value for the input data by directly using the learning model, and may generate the response or the control command based on the inference result.

Hereinafter, various embodiments of the AI devices 100a to 100e to which the above-described technology is applied will be described. The AI devices 100a to 100e illustrated in FIG. 3 may be regarded as a specific embodiment of the AI device 100 illustrated in FIG. 1.

### <AI + Robot>

The robot 100a, to which the AI technology is applied, may be implemented as a guide robot, a carrying robot, a cleaning robot, a wearable robot, an entertainment robot, a pet robot, an unmanned flying robot, or the like.

The robot 100a may include a robot control module for controlling the operation, and the robot control module may refer to a software module or a chip implementing the software module by hardware.

The robot 100a may acquire state information about the robot 100a by using sensor information acquired from various kinds of sensors, may detect (recognize) surrounding environment and objects, may generate map data, may determine the route and the travel plan, may determine the response to user interaction, or may determine the operation.

The robot 100a may use the sensor information acquired from at least one sensor among the lidar, the radar, and the camera so as to determine the travel route and the travel plan.

The robot 100a may perform the above-described operations by using the learning model composed of at least one artificial neural network. For example, the robot 100a may recognize the surrounding environment and the objects by using the learning model, and may determine the operation by using the recognized surrounding information or object information. The learning model may be learned directly from the robot 100a or may be learned from an external device such as the AI server 200.

At this time, the robot 100a may perform the operation by generating the result by directly using the learning model, but the sensor information may be transmitted to the external device such as the AI server 200 and the generated result may be received to perform the operation.

The robot 100a may use at least one of the map data, the object information detected from the sensor information, or the object information acquired from the external apparatus to determine the travel route and the travel plan, and may control the driving unit such that the robot 100a travels along the determined travel route and travel plan.

The map data may include object identification information about various objects arranged in the space in which the robot 100a moves. For example, the map data may include object identification information about fixed objects such as walls and doors and movable objects such as pollen and desks. The object identification information may include a name, a type, a distance, and a position.

In addition, the robot 100a may perform the operation or travel by controlling the driving unit based on the control/interaction of the user. At this time, the robot 100a may acquire the intention information of the interaction due to the user's operation or speech utterance, and may determine the response based on the acquired intention information, and may perform the operation.

### <AI + Self-Driving>

The self-driving vehicle 100b, to which the AI technology is applied, may be implemented as a mobile robot, a vehicle, an unmanned flying vehicle, or the like.

The self-driving vehicle 100b may include a self-driving control module for controlling a self-driving function, and the self-driving control module may refer to a software module or a chip implementing the software module by hardware. The self-driving control module may be included in the self-driving vehicle 100b as a component thereof, but may be implemented with separate hardware and connected to the outside of the self-driving vehicle 100b.

The self-driving vehicle 100b may acquire state information about the self-driving vehicle 100b by using sensor information acquired from various kinds of sensors, may detect (recognize) surrounding environment and objects, may generate map data, may determine the route and the travel plan, or may determine the operation.

Like the robot 100a, the self-driving vehicle 100b may use the sensor information acquired from at least one sensor among the lidar, the radar, and the camera so as to determine the travel route and the travel plan.

In particular, the self-driving vehicle 100b may recognize the environment or objects for an area covered by a field of view or an area over a certain distance by receiving the sensor information from external devices, or may receive directly recognized information from the external devices.

The self-driving vehicle 100b may perform the above-described operations by using the learning model composed of at least one artificial neural network. For example, the self-driving vehicle 100b may recognize the surrounding environment and the objects by using the learning model, and may determine the traveling movement line by using the recognized surrounding information or object information. The learning model may be learned directly from the self-driving vehicle 100b or may be learned from an external device such as the AI server 200.

At this time, the self-driving vehicle 100b may perform the operation by generating the result by directly using the learning model, but the sensor information may be transmitted to the external device such as the AI server 200 and the generated result may be received to perform the operation.

The self-driving vehicle 100b may use at least one of the map data, the object information detected from the sensor information, or the object information acquired from the external apparatus to determine the travel route and the travel plan, and may control the driving unit such that the self-driving vehicle 100b travels along the determined travel route and travel plan.

The map data may include object identification information about various objects arranged in the space (for example, road) in which the self-driving vehicle 100b travels. For example, the map data may include object identification information about fixed objects such as street lamps, rocks, and buildings and movable objects such as vehicles and pedestrians. The object identification information may include a name, a type, a distance, and a position.

In addition, the self-driving vehicle 100b may perform the operation or travel by controlling the driving unit based on the control/interaction of the user. At this time, the self-driving vehicle 100b may acquire the intention information of the interaction due to the user's operation or speech utterance, and may determine the response based on the acquired intention information, and may perform the operation.

### <AI + XR>

The XR device 100c, to which the AI technology is applied, may be implemented by a head-mount display (HMD), a head-up display (HUD) provided in the vehicle, a television, a mobile phone, a smartphone, a computer, a wearable device, a home appliance, a digital signage, a vehicle, a fixed robot, a mobile robot, or the like.

The XR device 100c may analyze three-dimensional point cloud data or image data acquired from various sensors or the external devices, generate position data and attribute data for the three-dimensional points, acquire information about the surrounding space or the real object, and render to output the XR object to be output. For example, the XR device 100c may output an XR object including the additional information about the recognized object in correspondence to the recognized object.

The XR device 100c may perform the above-described operations by using the learning model composed of at least one artificial neural network. For example, the XR device 100c may recognize the real object from the three-dimensional point cloud data or the image data by using the learning model, and may provide information corresponding to the recognized real object. The learning model may be directly learned from the XR device 100c, or may be learned from the external device such as the AI server 200.

At this time, the XR device 100c may perform the operation by generating the result by directly using the learning model, but the sensor information may be transmitted to the external device such as the AI server 200 and the generated result may be received to perform the operation.

### <AI + Robot + Self-Driving>

The robot 100a, to which the AI technology and the self-driving technology are applied, may be implemented as a guide robot, a carrying robot, a cleaning robot, a wearable robot, an entertainment robot, a pet robot, an unmanned flying robot, or the like.

The robot 100a, to which the AI technology and the self-driving technology are applied, may refer to the robot itself having the self-driving function or the robot 100a interacting with the self-driving vehicle 100b.

The robot 100a having the self-driving function may collectively refer to a device that moves for itself along the given movement line without the user's control or moves for itself by determining the movement line by itself.

The robot 100a and the self-driving vehicle 100b having the self-driving function may use a common sensing method so as to determine at least one of the travel route or the travel plan. For example, the robot 100a and the self-driving vehicle 100b having the self-driving function may determine at least one of the travel route or the travel plan by using the information sensed through the lidar, the radar, and the camera.

The robot 100a that interacts with the self-driving vehicle 100b exists separately from the self-driving vehicle 100b and may perform operations interworking with the self-driving function of the self-driving vehicle 100b or interworking with the user who rides on the self-driving vehicle 100b.

At this time, the robot 100a interacting with the self-driving vehicle 100b may control or assist the self-driving function of the self-driving vehicle 100b by acquiring sensor information on behalf of the self-driving vehicle 100b and providing the sensor information to the self-driving vehicle 100b, or by acquiring sensor information, generating environment information or object information, and providing the information to the self-driving vehicle 100b.

Alternatively, the robot 100a interacting with the self-driving vehicle 100b may monitor the user boarding the self-driving vehicle 100b, or may control the function of the self-driving vehicle 100b through the interaction with the user. For example, when it is determined that the driver is in a drowsy state, the robot 100a may activate the self-driving function of the self-driving vehicle 100b or assist the control of the driving unit of the self-driving vehicle 100b. The function of the self-driving vehicle 100b controlled by the robot 100a may include not only the self-driving function but also the function provided by the navigation system or the audio system provided in the self-driving vehicle 100b.

Alternatively, the robot 100a that interacts with the self-driving vehicle 100b may provide information or assist the function to the self-driving vehicle 100b outside the self-driving vehicle 100b. For example, the robot 100a may provide traffic information including signal information and the like, such as a smart signal, to the self-driving vehicle 100b, and automatically connect an electric charger to a charging port by interacting with the self-driving vehicle 100b like an automatic electric charger of an electric vehicle.

### <AI + Robot + XR>

The robot 100a, to which the AI technology and the XR technology are applied, may be implemented as a guide robot, a carrying robot, a cleaning robot, a wearable robot, an entertainment robot, a pet robot, an unmanned flying robot, a drone, or the like.

The robot 100a, to which the XR technology is applied, may refer to a robot that is subjected to control/interaction in an XR image. In this case, the robot 100a may be separated from the XR device 100c and interwork with each other.

When the robot 100a, which is subjected to control/interaction in the XR image, may acquire the sensor information from the sensors including the camera, the robot 100a or the XR device 100c may generate the XR image based on the sensor information, and the XR device 100c may output the generated XR image. The robot 100a may operate based on the control signal input through the XR device 100c or the user's interaction.

For example, the user can confirm the XR image corresponding to the time point of the robot 100a interworking remotely through the external device such as the XR device 100c, adjust the self-driving travel path of the robot 100a through interaction, control the operation or driving, or confirm the information about the surrounding object.

### <AI + Self-Driving + XR>

The self-driving vehicle 100b, to which the AI technology and the XR technology are applied, may be implemented as a mobile robot, a vehicle, an unmanned flying vehicle, or the like.

The self-driving vehicle 100b, to which the XR technology is applied, may refer to a self-driving vehicle having a means for providing an XR image or a self-driving vehicle that is subjected to control/interaction in an XR image. Particularly, the self-driving vehicle 100b that is subjected to control/interaction in the XR image may be distinguished from the XR device 100c and interwork with each other.

The self-driving vehicle 100b having the means for providing the XR image may acquire the sensor information from the sensors including the camera and output the generated XR image based on the acquired sensor information. For example, the self-driving vehicle 100b may include an HUD to output an XR image, thereby providing a passenger with a real object or an XR object corresponding to an object in the screen.

At this time, when the XR object is output to the HUD, at least part of the XR object may be outputted so as to overlap the actual object to which the passenger's gaze is directed. Meanwhile, when the XR object is output to the display provided in the self-driving vehicle 100b, at least part of the XR object may be output so as to overlap the object in the screen. For example, the self-driving vehicle 100b may output XR objects corresponding to objects such as a lane, another vehicle, a traffic light, a traffic sign, a two-wheeled vehicle, a pedestrian, a building, and the like.

When the self-driving vehicle 100b, which is subjected to control/interaction in the XR image, may acquire the sensor information from the sensors including the camera, the self-driving vehicle 100b or the XR device 100c may generate the XR image based on the sensor information, and the XR device 100c may output the generated XR image. The self-driving vehicle 100b may operate based on the control signal input through the external device such as the XR device 100c or the user's interaction.

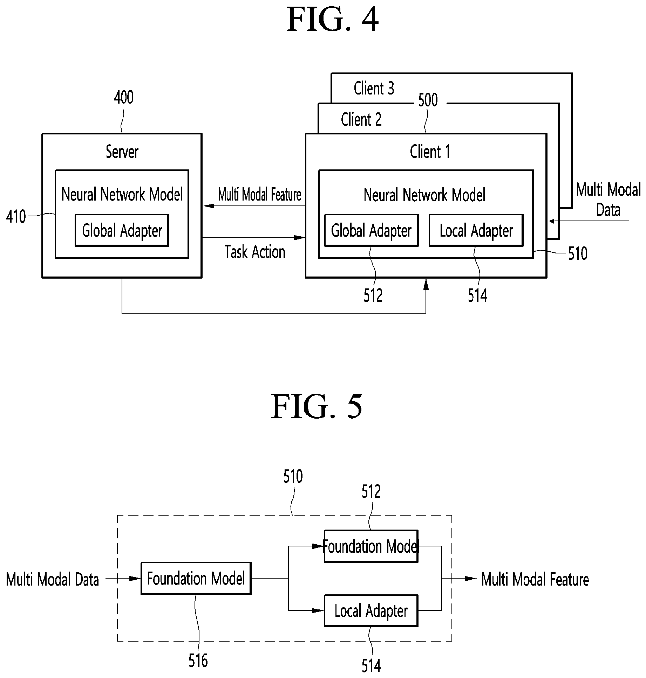

FIG. 4 is a drawing for explaining the operation of a federated learning apparatus according to an embodiment of the present disclosure.

As illustrated in FIG. 4, the federated learning apparatus of the present disclosure may include a server 400 and one or more clients 500 communicatively connected to the server 400.

Here, the client 500 may be an individual device, may be an individual hub communicatively connected to a plurality of devices, or may be an individual cloud communicatively connected to a plurality of hubs, which can be adjusted according to the physical scope.

The client 500 may generate a multi modal feature based on a first neural network model 510 including a first global adapter 512 and a local adapter 514.

As one example, the first neural network model 510 may include a pre-trained first foundation model, a first global adapter 512 in which common characteristics of the client are reflected, and a local adapter 514 in which unique characteristics of the client are reflected.

Here, the first global adapter 512 is updated with a second global adapter 410 distributed from the server 400, and the local adapter 514 may be retrained based on at least one of local data of the client 500 and global data of the server 400.

The client 500 classifies a result value output from the pre-trained first foundation model into the first global adapter 512 in which common characteristics are reflected and the local adapter 514 in which unique characteristics are reflected, and may generate a multi modal feature based on the first global adapter 512 and the local adapter 514 and provide it to the server 400.

Here, when classifying the first global adapter 512 or the local adapter 514, the client 500 collects multi modal data, inputs the collected multi modal data to the pre-trained first foundation model to output an inferred result value, and may classify the result value into the first global adapter 512 or the local adapter 514 based on characteristic weights assigned to the result value.

For example, when classifying the result value, the client 500 assigns weights for global characteristics and local characteristics to the result value according to the characteristics of the result value, and if the weight for local characteristics assigned to the result value is greater than the weight for global characteristics, classifies the result value as the local adapter 514, and if the weight for local characteristics assigned to the result value is smaller than the weight for global characteristics, may classify the result value as the first global adapter 512.

In addition, when providing multi modal features to the server 400, the client 500 averages the weights of the features corresponding to the first global adapter 512 and the weights of the features corresponding to the local adapter 514, fuses the features corresponding to the first global adapter 512 and the features corresponding to the local adapter 514, and may generate a multi modal feature including the fused features and provide it to the server 400.

As one embodiment, when the client 500 is incapable of self-learning for the local adapter 514, if the client 500 determines that self-learning for the local adapter 514 is impossible, the client 500 stores local data corresponding to the operation of the first neural network model 510 and may transmit the local data to the server 400.

Here, when transmitting the local data, the client 500 checks whether the stored local data satisfies a preset transmission condition, and if the preset transmission condition is satisfied, may transmit the local data to the server 400.

As one example, when checking whether the preset transmission condition is satisfied, the client 500 may check whether the preset transmission condition satisfies at least one of a condition for transmitting by a set period, a condition for transmitting by a set data amount, a condition for transmitting by data having set characteristics, and a condition for transmitting by a set communication state, but this is only one embodiment and is not limited thereto.

And, the client 500 checks whether the retrained second global adapter is received from the server 400, and if the retrained second global adapter is received, may update the local adapter 514 based on the second global adapter.

In addition, the client 500 requests the second global adapter from the server 400 before operation of the first neural network model 510, and if the second global adapter is received from the server 400, may initialize the local adapter 514 based on the second global adapter.

As another embodiment, when the client 500 is capable of self-learning for the local adapter 514, if the client 500 determines that self-learning for the local adapter 514 is possible, the client 500 determines whether retraining of the local adapter 514 of the first neural network model 510 is necessary, and if it is determined that retraining of the local adapter 514 is necessary, retrains the local adapter 514 based on at least one of the local data of the client 500 and the global data of the server 400, and may transmit the retrained local adapter 514 to the server 400.

Here, the client 500 checks whether the retrained second global adapter is received from the server 400, and if the retrained second global adapter is received, may update the first global adapter 512 based on the retrained second global adapter.

In addition, if the retrained second global adapter and retraining resources are simultaneously received from the server 400, the client 500 classifies the retrained second global adapter and the retraining resources, stores the classified retraining resources, and at the same time, may update the first global adapter 512 based on the retrained second global adapter.

In some cases, if the retrained second global adapter and the retraining resources are received from the server 400 at different times, the client 500 may sequentially perform the process of storing the retraining resources classified according to the order of reception time and the process of updating the first global adapter 512 based on the retrained second global adapter.

In another case, the client 500 may request retraining resources from the server 400, and if retraining resources are received from the server 400, store the retraining resources.

Here, the client 500 may request retraining resources from the server 400 each time the retrained second global adapter is received from the server 400, or may request retraining resources from the server 400 by a preset period.

In addition, the client 500 requests the second global adapter from the server 400 before operation of the first neural network model 510, and if the second global adapter is received from the server 400, may initialize the local adapter 514 based on the second global adapter.

Then, when a task action is received from the server 400, the client 500 may execute a service corresponding to the task action and provide it to the user.

On the other hand, the server 400 may be one hub that federated a plurality of devices when the client 500 is an individual device, may be one cloud that federated a plurality of hubs when the client 500 is an individual hub, and may be a large cloud that federated a plurality of clouds when the client 500 is an individual cloud, which can be adjusted according to the physical scope.

The server 400 may generate a task action corresponding to multi modal features based on a second neural network model 410 including a second global adapter and provide it to the client 500.

Here, the server 400 collects the trained local adapter 514 from the client 500, retrains the second global adapter of the second neural network model 410 based on the collected local adapter 514, and distributes the retrained second global adapter to the client 500 to update the first global adapter 512 of the client 500 with the retrained second global adapter.

As one example, the second neural network model 410 may include a pre-trained second foundation model and a second global adapter in which common characteristics of the federated clients 500 are reflected.

Here, the second global adapter may be retrained and updated based on a plurality of local adapters 514 received from the federated clients 500.

In addition, the server 400, before acquiring multi modal features from the federated clients 500, initializes the second neural network model 410 based on global data, and may distribute the second global adapter and learning resources to the federated clients 500.

Then, the server 400 collects local adapters and local data from the federated clients 500, classifies the collected local data and local data by client, checks whether local adapters and local data have been collected from all federated clients, and if local adapters and local data are collected from all federated clients, may retrain the second global adapter based on the local adapters collected from the federated clients.

Here, when retraining the second global adapter, the server 400, if local adapters 514 of all federated clients 500 are collected, checks whether retraining resources need to be changed, and if retraining resources need to be changed, may retrain the second global adapter based on the collected local adapters 514 after updating the second neural network model 410 based on the local adapters and local data of the client.

At this time, if retraining resources do not need to be changed, the server 400 retrains only the second global adapter of the second neural network model 410 based on the collected local adapters 514, and may distribute the retrained second global adapter to the federated clients 500.

In some cases, the server 400 may check whether the second neural network model 410 excluding the retrained second global adapter needs to be lightweighted, and if lightweighting of the second neural network model 410 is necessary, may generate a distribution lightweighted model corresponding to the retrained second global adapter and update the retraining resources.

In another case, after the second global adapter is retrained, the server 400 may check whether pre-stored global data has changed, and if the global data has changed, may select distribution source data corresponding to the retrained second global adapter from the global data and update the retraining resources.

Here, if the retraining resources are updated, the server 400 checks whether the global data has changed, and if the global data has changed, resamples distribution learning data, retrains the second global adapter based on the resampled learning data, and may distribute the retraining resources including the second global adapter and at least one of the learning data and the lightweighted model to the federated clients.

In addition, when generating a task action, if multi modal features are received from the clients 500, the server 400 selects a task corresponding to the multi modal features and may generate a task action corresponding to the selected task.

As described above, the present disclosure can efficiently train neural network models of a server and clients so that both common characteristics in various real environments and individual unique characteristics are reflected, by training the local adapter of the client, retraining the global adapter of the server based on the trained local data, and distributing the retrained second global adapter to the client.

In addition, the present disclosure can train neural network models of each client and the global neural network model of the server to maintain alignment with each other, thereby improving task performance, by the server distributing the retrained second global adapter and retraining resources together to the client.

FIG. 5 is a drawing for explaining a neural network model of a client of a federated learning apparatus according to an embodiment of the present disclosure.

As illustrated in FIG. 5, the client of the present disclosure, when multi modal data is received, may input the received multi modal data to the first neural network model 510 to output a multi modal feature.

The first neural network model 510 may include a pre-trained first foundation model 516, a first global adapter 512 in which common characteristics of the client are reflected, and a local adapter 514 in which unique characteristics of the client are reflected.

Here, the first global adapter 512 is updated with the second global adapter distributed from the server, and the local adapter 514 may be retrained based on at least one of the local data of the client and the global data of the server.

The first neural network model 510 classifies a result value output from the pre-trained first foundation model 516 into the first global adapter 512 in which common characteristics are reflected and the local adapter 514 in which unique characteristics are reflected, and may output a multi modal feature based on the first global adapter 512 and the local adapter 514.

The first neural network model 510 assigns weights for global characteristics and local characteristics to the result value according to the characteristics of the result value, and if the weight for local characteristics assigned to the result value is greater than the weight for global characteristics, classifies the result value as the local adapter 514, and if the weight for local characteristics assigned to the result value is smaller than the weight for global characteristics, may classify the result value as the first global adapter 512, but this is only one embodiment and is not limited thereto.

Here, the multi modal feature may include fused features when the weights of the features corresponding to the first global adapter 512 and the weights of the features corresponding to the local adapter 514 are averaged and the features corresponding to the first global adapter 512 and the features corresponding to the local adapter 514 are fused.

As one embodiment, when the client is incapable of self-learning for the local adapter 514, the first neural network model 510 transmits a multi modal feature including local data to the server, and if a retrained second global adapter is received from the server, may update the local adapter 514 based on the retrained second global adapter.

As another embodiment, when the client is capable of self-learning for the local adapter 514, the first neural network model 510 transmits the retrained local adapter 514 to the server, and if a retrained second global adapter is received from the server, may update the first global adapter 512 based on the retrained second global adapter.

In some cases, the first neural network model 510 may be updated based on the retrained second global adapter and the retraining resources when the retrained second global adapter and retraining resources are received from the server.

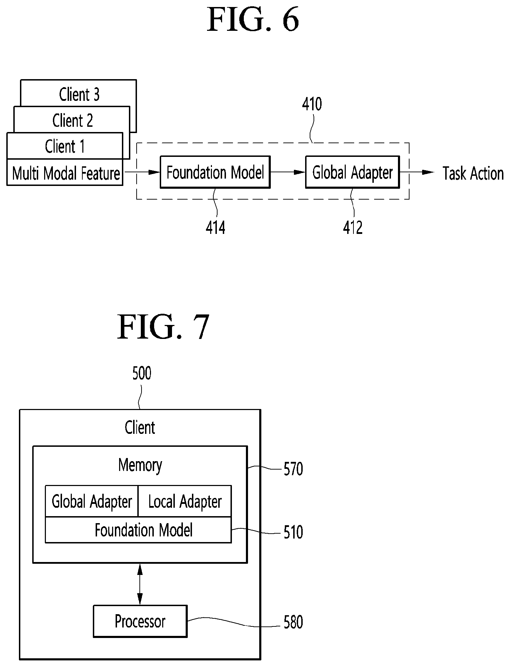

FIG. 6 is a drawing for explaining a neural network model of a server of a federated learning apparatus according to an embodiment of the present disclosure.

As illustrated in FIG. 6, the server of the present disclosure, when multi modal features are received from a plurality of federated clients, may input the multi modal features to the second neural network model 410 to output a task action corresponding to the multi modal features.

The second neural network model 410 may include a pre-trained second foundation model 414 and a second global adapter 412 in which common characteristics of the federated clients are reflected.

Here, the second global adapter 412, when local adapters are extracted from the multi modal features received from the federated clients, may be retrained and updated based on the plurality of local adapters.

The second neural network model 410 is initialized based on global data before acquiring multi modal features from the federated clients, and if local adapters and local data are collected from the federated clients, may retrain the second global adapter 412 based on the collected local adapters.

In addition, the second neural network model 410, if retraining resources need to be changed, may retrain the second global adapter 412 based on the collected local adapters after updating based on the local adapters and local data of the client.

At this time, the second neural network model 410, if retraining resources do not need to be changed, may retrain only the second global adapter 412 based on the collected local adapters.

In some cases, the second neural network model 410, if lightweighting is necessary for an area other than the second global adapter 412, may be transformed into a distribution lightweighted model corresponding to the retrained second global adapter to update the retraining resources.

In another case, the second neural network model 410, if global data changes after the second global adapter is retrained, may retrain the second global adapter 412 based on resampled learning data by resampling distribution learning data.

FIG. 7 is a drawing for explaining a client operation of a federated learning apparatus according to an embodiment of the present disclosure.

As illustrated in FIG. 7, the client 500 of the present disclosure may include a memory 570 in which the first neural network model 510 including the first global adapter and the local adapter is stored, and a processor 580 that generates a multi modal feature based on the output value of the first neural network model 510.

Here, the processor 580, when the retrained second global adapter is received from the server, updates the first global adapter based on the retrained second global adapter, retrains the local adapter based on at least one of the local data of the client and the global data of the server, and may generate a multi modal feature based on the first global adapter and the local adapter and provide it to the server.

The processor 580 classifies a result value output from the pre-trained first foundation model into the first global adapter in which common characteristics are reflected and the local adapter in which unique characteristics are reflected, and may generate a multi modal feature based on the first global adapter and the local adapter and provide it to the server.

The processor 580 collects multi modal data, inputs the collected multi modal data to the pre-trained first foundation model to output an inferred result value, and may classify the result value into the first global adapter or the local adapter based on characteristic weights assigned to the result value.

For example, the processor 580 assigns weights for global characteristics and local characteristics to the result value according to the characteristics of the result value, and if the weight for local characteristics assigned to the result value is greater than the weight for global characteristics, classifies the result value as the local adapter, and if the weight for local characteristics assigned to the result value is smaller than the weight for global characteristics, may classify the result value as the first global adapter.

In addition, the processor 580 averages the weights of the features corresponding to the first global adapter and the weights of the features corresponding to the local adapter, fuses the features corresponding to the first global adapter and the features corresponding to the local adapter, and may generate a multi modal feature including the fused features and provide it to the server.

And, if it is determined that self-learning for the local adapter is impossible, the processor 580 stores local data corresponding to the operation of the first neural network model 510, transmits the local data to the server, checks whether the retrained second global adapter is received from the server, and if the retrained second global adapter is received, may update the local adapter based on the second global adapter.

Here, the processor 580 requests the second global adapter from the server before operation of the first neural network model 510, and if the second global adapter is received from the server, may initialize the local adapter based on the second global adapter.

In addition, the processor 580 checks whether the stored local data satisfies a preset transmission condition, and if the preset transmission condition is satisfied, may transmit the local data to the server.

As one example, when checking whether the preset transmission condition is satisfied, the processor 580 may check whether the preset transmission condition satisfies at least one of a condition for transmitting by a set period, a condition for transmitting by a set data amount, a condition for transmitting by data having set characteristics, and a condition for transmitting by a set communication state, but this is only one embodiment and is not limited thereto.

Next, if it is determined that self-learning for the local adapter is possible, the processor 580 determines whether retraining of the local adapter of the first neural network model 510 is necessary, and if it is determined that retraining of the local adapter is necessary, retrains the local adapter based on at least one of the local data of the client and the global data of the server, transmits the retrained local adapter to the server, checks whether the retrained second global adapter is received from the server, and if the retrained second global adapter is received, may update the first global adapter based on the retrained second global adapter.

Here, the processor 580 requests the second global adapter from the server before operation of the first neural network model 510, and if the second global adapter is received from the server, may initialize the local adapter based on the second global adapter.

In addition, if the retrained second global adapter and retraining resources are simultaneously received from the server, the processor 580 classifies the retrained second global adapter and the retraining resources, stores the classified retraining resources, and at the same time, may update the first global adapter based on the retrained second global adapter.

In some cases, if the retrained second global adapter and the retraining resources are received from the server at different times, the processor 580 may sequentially perform the process of storing the retraining resources classified according to the order of reception time and the process of updating the first global adapter based on the retrained second global adapter.

In addition, the processor 580 requests retraining resources from the server, and if retraining resources are received from the server, may store the retraining resources.

Here, the processor 580 may request retraining resources from the server each time the retrained second global adapter is received from the server, or may request retraining resources from the server by a preset period.

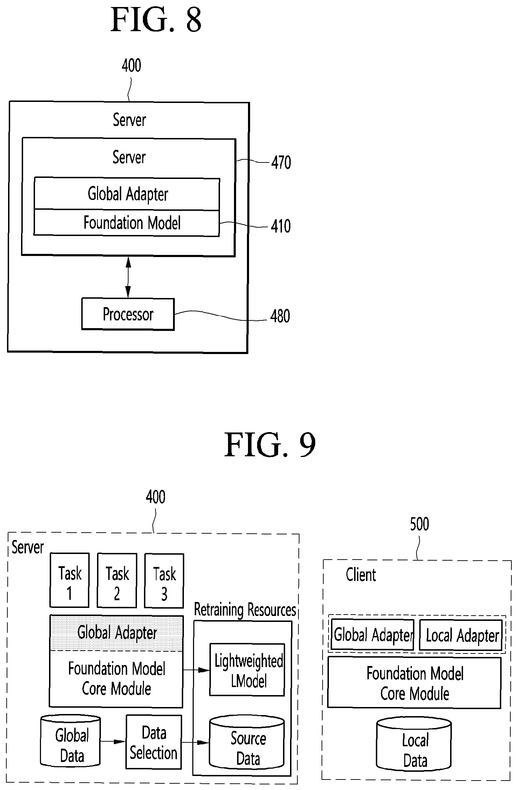

FIG. 8 is a drawing for explaining a server operation of a federated learning apparatus according to an embodiment of the present disclosure.

As illustrated in FIG. 8, the server 400 may include a memory 470 in which the second neural network model 410 including the second global adapter is stored, and a processor 480 that generates a task action corresponding to the multi modal features received from the client.

Here, the processor 480 collects local adapters and local data from the federated clients, retrains the second global adapter based on the local adapters collected from the federated clients, checks whether retraining resources corresponding to the retrained second global adapter are updated, and if the retraining resources are updated, may distribute the retrained second global adapter and the updated retraining resources to the federated clients.

Here, the processor 480, before acquiring multi modal features from the federated clients, initializes the second neural network model 410 based on global data, and may distribute the second global adapter and learning resources to the federated clients.

And, the processor 480 collects local adapters and local data from the federated clients, classifies the collected local data and local data by client, checks whether local adapters and local data have been collected from all federated clients, and if local adapters and local data are collected from all federated clients, may retrain the second global adapter based on the local adapters collected from the federated clients.

Here, the processor 480, if local adapters of all federated clients are collected, checks whether retraining resources need to be changed, and if retraining resources need to be changed, may retrain the second global adapter based on the collected local adapters after updating the second neural network model 410 based on the local adapters and local data of the client.

At this time, the processor 480, if retraining resources do not need to be changed, retrains only the second global adapter of the second neural network model based on the collected local adapters, and may distribute the retrained second global adapter to the federated clients.

In some cases, the processor 480 may check whether the second neural network model 410 excluding the retrained second global adapter needs to be lightweighted, and if lightweighting of the second neural network model 410 is necessary, may generate a distribution lightweighted model corresponding to the retrained second global adapter and update the retraining resources.

In another case, after the second global adapter is retrained, the processor 480 may check whether pre-stored global data has changed, and if the global data has changed, may select distribution source data corresponding to the retrained second global adapter from the global data and update the retraining resources.

Here, if the retraining resources are updated, the processor 480 checks whether the global data has changed, and if the global data has changed, resamples distribution learning data, retrains the second global adapter based on the resampled learning data, and may distribute the retraining resources including the second global adapter and at least one of the learning data and the lightweighted model to the federated clients.

FIG. 9 is a drawing for explaining the overall structure of a federated learning apparatus according to an embodiment of the present disclosure.

As illustrated in FIG. 9, the client 500 of the present disclosure generates a multi modal feature based on a first neural network model including a first global adapter, a local adapter, and a foundation model core module, and may store local data corresponding to the operation of the first neural network model in a database.

And, the server 400 of the present disclosure selects a task corresponding to the multi modal features of the client 500 based on a second neural network model including a second global adapter and a foundation model core module, generates a task action corresponding to the selected task and provides it to the client 500, and may store global data corresponding to the operation of the second neural network model in a database.

In addition, the server 400 checks whether the second neural network model excluding the retrained second global adapter needs to be lightweighted, and if lightweighting of the second neural network model is necessary, may generate a distribution lightweighted model corresponding to the retrained second global adapter and update the retraining resources.

In addition, after the second global adapter is retrained, the server 400 checks whether the global data stored in the database has changed, and if the global data has changed, may select distribution source data corresponding to the retrained second global adapter from the global data stored in the database and update the retraining resources.

Here, if the global data stored in the database has changed, the server 400 resamples distribution learning data from the database, retrains the second global adapter based on the resampled learning data, and may distribute the retraining resources including the second global adapter and at least one of the learning data and the lightweighted model to the client 500.

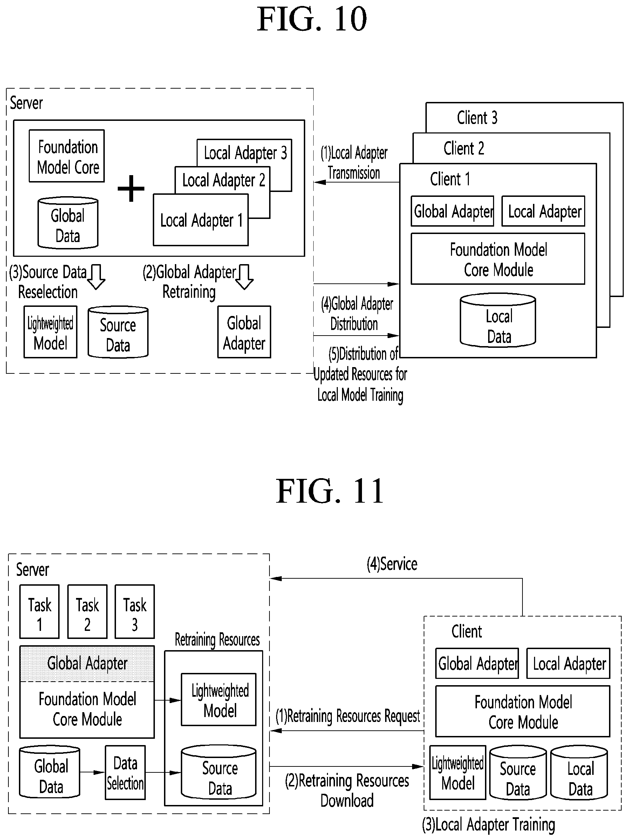

FIG. 10 is a drawing for explaining a global update process of a federated learning apparatus according to an embodiment of the present disclosure.

As illustrated in FIG. 10, the server of the present disclosure may receive a local adapter including unique characteristics of each client from a plurality of federated clients.

Then, the server may retrain the global adapter based on the local adapter including the unique characteristics of each client.

Here, since the global adapter of the server is retrained based on the local adapter including the unique characteristics of each client, it can learn various contexts experienced by the plurality of clients.

Therefore, at the time of inference, the global adapter of the server can generate a result value in which both the common characteristics of the plurality of clients and the unique characteristics of each individual client are reflected.

Next, the server checks whether the neural network model excluding the retrained global adapter needs to be lightweighted, and if lightweighting of the neural network model is necessary, may generate a distribution lightweighted model corresponding to the retrained global adapter and update the retraining resources.

In addition, after the global adapter is retrained, the server checks whether global data has changed, and if the global data has changed, may select distribution source data corresponding to the retrained global adapter from the global data and update the retraining resources.

And, if the retraining resources are updated, the server checks whether global data has changed, and if the global data has changed, resamples distribution learning data, retrains the global adapter based on the resampled learning data, and may distribute the retrained global adapter to the plurality of federated clients.

In addition, the server may distribute the updated retraining resources for training of a local model to the plurality of federated clients.

Here, the distributed retraining resources may include at least one of distribution learning data and a distribution lightweighted model.

As described above, the present disclosure can train neural network models of each client and the global neural network model of the server to maintain alignment with each other, thereby improving task performance, by the server distributing the retrained second global adapter and retraining resources together to the client.

FIG. 11 is a drawing for explaining a local update process of a federated learning apparatus according to an embodiment of the present disclosure.

As illustrated in FIG. 11, the client of the present disclosure may request retraining resources from the server, and if retraining resources are received from the server, store the retraining resources.

Here, the client may request retraining resources from the server each time the retrained global adapter is received from the server, or may request retraining resources from the server by a preset period.

The client, when retraining resources are received from the server, may store source data and a lightweighted model for model training among the retraining resources in a database.

Then, the client may retrain the local adapter based on at least one of global data including the retraining resources and local data.

Here, since the client retrains the local adapter based on global data including the retraining resources received from the server and local data stored in the database, the neural network model of the client and the global neural network model of the server can maintain alignment with each other.

Next, the client may transmit the retrained local adapter to the server.

Here, the client may transmit the multi modal feature including the retrained local adapter to the server.

In addition, when the retrained global adapter is received from the server, the client may update the global adapter of the client based on the retrained global adapter of the server.

Here, if the retrained global adapter and retraining resources are simultaneously received from the server, the client classifies the retrained global adapter and the retraining resources, stores the classified retraining resources, and at the same time, may update the global adapter of the client based on the retrained global adapter of the server.

In some cases, if the retrained global adapter and the retraining resources are received from the server at different times, the client may sequentially perform the process of storing the retraining resources classified according to the order of reception time and the process of updating the global adapter of the client based on the retrained global adapter of the server.

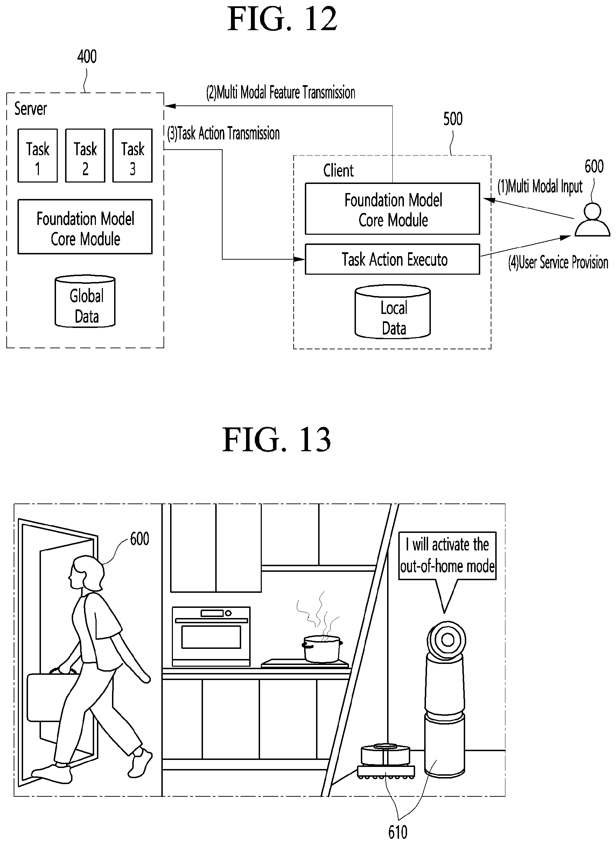

FIG. 12 is a drawing for explaining a multi modal-based service provision process of a federated learning apparatus according to an embodiment of the present disclosure.

As illustrated in FIG. 12, the client 500 of the present disclosure, when multi modal data is received from a user 600 or the like, may input the received multi modal data to the neural network model to generate a multi modal feature and transmit it to the server 400.

The neural network model of the client 500 may include a pre-trained foundation model, a global adapter in which common characteristics of the client are reflected, and a local adapter in which unique characteristics of the client are reflected.

Here, the global adapter is updated with the global adapter distributed from the server, and the local adapter may be retrained based on at least one of the local data of the client and the global data of the server.

Then, when multi modal features are received from a plurality of federated clients, the server 400 may input the multi modal features to the neural network model to generate a task action corresponding to the multi modal features and transmit it to the client.

Here, the neural network model of the server may include a pre-trained foundation model and a global adapter in which common characteristics of the federated clients are reflected.

Here, when local adapters are extracted from the multi modal features received from the federated clients, the global adapter may be retrained and updated based on the plurality of local adapters.

Next, when a task action is received from the server 400, the client 500 may execute a service corresponding to the task action through a task action executor and provide it to the user.

Here, when the client 500 is incapable of self-learning for the local adapter, if the retrained global adapter is received from the server 400, the client 500 may update the local adapter of the client 500 based on the retrained global adapter.

In some cases, when the client 500 is capable of self-learning for the local adapter, the client 500 transmits the retrained local adapter to the server 400, and if the retrained global adapter is received from the server 400, may update the global adapter of the client 500 based on the retrained global adapter of the server 400.

In addition, if the retrained global adapter and retraining resources are received from the server 400, the client 500 may update the model based on the retrained global adapter and the retraining resources.

FIGS. 13 to 15 are drawings for explaining embodiments of multi modal-based service application of a federated learning apparatus according to an embodiment of the present disclosure.

As illustrated in FIG. 13, the federated learning apparatus of the present disclosure, when the client is a home hub and the server is a cloud communicatively connected to a plurality of home hubs, may provide a multi modal-based smart device control service.

As one example, the client of the present disclosure may recognize that the user 600 is going outside through image data acquired from a camera.

Then, the client of the present disclosure may recognize the sound of a door closing through audio data acquired from a microphone.

Next, the client of the present disclosure may recognize that a vehicle is leaving a parking lot through log data.

And, the client of the present disclosure may input multi modal data including image data, audio data, and log data to the neural network model to generate multi modal features and transmit them to the server.

Then, the server of the present disclosure may determine the state of the user based on the multi modal features collected from the client.

Next, if the user's state is recognized as an out-of-home state, the server of the present disclosure identifies the state of home appliances within the client, selects a task for determining execution of an out-of-home mode for a specific home appliance, and may generate a task action corresponding to the selected task and transmit it to the client.

And, when the task action is received, the client of the present disclosure may execute an out-of-home mode for the electronic device 610 corresponding to the task action.

As one example, if the electronic device 610 corresponding to the task action is a robot cleaner and an air purifier, the client of the present disclosure may provide a multi modal-based smart device control service of turning on the robot cleaner and turning off the air purifier.

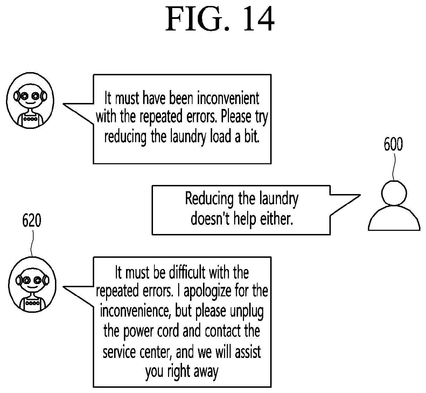

As illustrated in FIG. 14, the federated learning apparatus of the present disclosure, when the client is a home hub and the server is a cloud communicatively connected to a plurality of home hubs, may provide a multi modal-based interactive service.

As one example, the client of the present disclosure may recognize that the user 600 is angry through vision data acquired from a camera.

Then, the client of the present disclosure may recognize that the user 600 is angry as the user's vocal tone is rising through sound data acquired from a microphone.

Next, the client of the present disclosure may recognize that errors are continuously occurring in the washing machine through log data.

And, the client of the present disclosure may input multi modal data including vision data, sound data, and log data to the neural network model to generate multi modal features and transmit them to the server.

Then, the server of the present disclosure may determine the state of the user and the state of the washing machine based on the multi modal features collected from the client.

Next, the server of the present disclosure may generate a consultation sentence based on the state of the user and the state of the washing machine, and transmit the generated consultation sentence to the local device of the client.

And, the client of the present disclosure may execute a conversation with the user 600 through the chatbot 620 of the local device.

As one example, the chatbot 620 of the local device may provide a multi modal-based interactive service of adding small talk to soothe or empathize with the angry user 600 through a conversation engine to which a context is input.

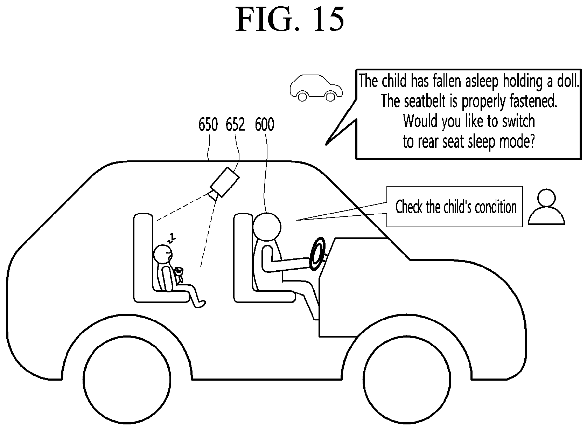

As illustrated in FIG. 15, the federated learning apparatus of the present disclosure, when the client is a smart car and the server is a smart car agent communicatively connected to a plurality of smart cars, may provide a multi modal-based smart car service.

As one example, the client of the present disclosure may acquire a user command from the user 600 driving the smart car 650 to check the state of a child sitting in the rear seat of the smart car 650, and may transmit the acquired user command to the server.

Next, the server of the present disclosure may analyze the user command and request the image from the rear seat camera 652 of the smart car 650 from the client.

Then, the client of the present disclosure may activate the rear seat camera 652 of the smart car 650 to acquire an image of the child sitting in the rear seat and transmit it to the server.

And, the server of the present disclosure may check the current state of the child based on the image of the child sitting in the rear seat, and convert the current state of the child into a notification message in text and sound form and transmit it to the client.

Then, the server of the present disclosure may select a task based on the current state of the child, and generate a task action corresponding to the selected task and transmit it to the client.

As one example, if the current state of the child is a sleep state, the server of the present disclosure selects a task as rear seat sleep environment mode, and may generate a task action for controlling electronic devices of the smart car 650 to sleep mode corresponding to the selected task and transmit it to the client.

Next, when the task action is received, the client of the present disclosure may execute sleep mode for the electronic device corresponding to the task action.

As one example, if the electronic device corresponding to the task action is a rear seat, the inclination of the rear seat is adjusted to sleep mode; if it is a temperature and humidity device, the temperature and humidity device is adjusted to sleep mode; and if it is an audio device, the multi modal-based smart car service of turning off the audio device can be provided.

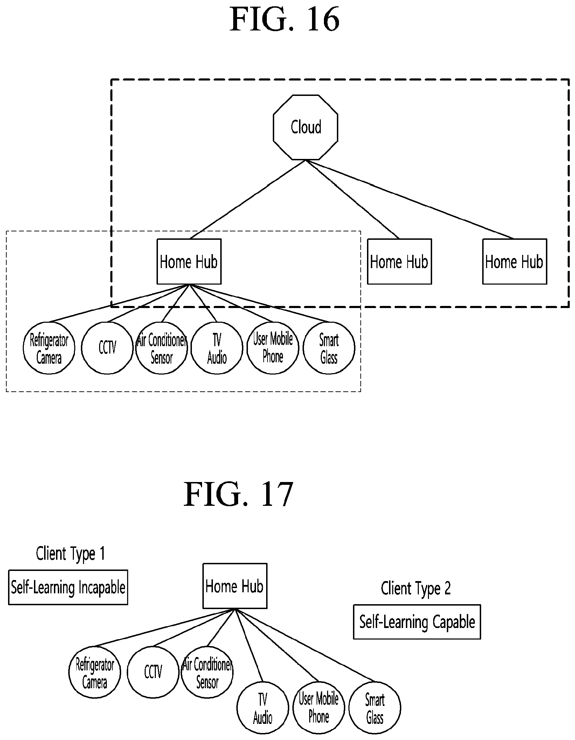

FIGS. 16 and 17 are drawings for explaining a server product and a client product of a federated learning apparatus according to an embodiment of the present disclosure.

As illustrated in FIG. 16, the federated learning apparatus of the present disclosure can set the physical configuration and logical configuration between the server and the client in various ranges.

Here, the client may be an individual device, may be an individual hub communicatively connected to a plurality of devices, or may be an individual cloud communicatively connected to a plurality of hubs, which can be adjusted according to the physical scope.

In addition, the server may be one hub that federated a plurality of devices when the client is an individual device, may be one cloud that federated a plurality of hubs when the client is an individual hub, and may be a large cloud that federated a plurality of clouds when the client is an individual cloud, which can be adjusted according to the physical scope.

As in FIG. 16, the server may be one cloud that federated a plurality of home hubs, and the client may be an individual home hub.

In addition, the server may be one home hub that federated a plurality of devices, and the client may be an individual device.

On the other hand, as illustrated in FIG. 17, in the federated learning apparatus of the present disclosure, the client may be classified into a first client type incapable of self-learning and a second client type capable of self-learning.

The client of the present disclosure has differences in the learning process according to the first client type incapable of self-learning and the second client type capable of self-learning.

If the present disclosure determines that self-learning for the local adapter of the client is impossible, it stores local data corresponding to the operation of the neural network model, transmits the local data to the server, checks whether the retrained global adapter is received from the server, and if the retrained global adapter of the server is received, may update the local adapter based on the global adapter of the server.

And, if the present disclosure determines that self-learning for the local adapter of the client is possible, it determines whether retraining of the local adapter of the neural network model is necessary, and if it is determined that retraining of the local adapter is necessary, retrains the local adapter based on at least one of the local data of the client and the global data of the server, transmits the retrained local adapter to the server, checks whether the retrained global adapter is received from the server, and if the retrained global adapter of the server is received, may update the global adapter of the client based on the retrained global adapter of the server.

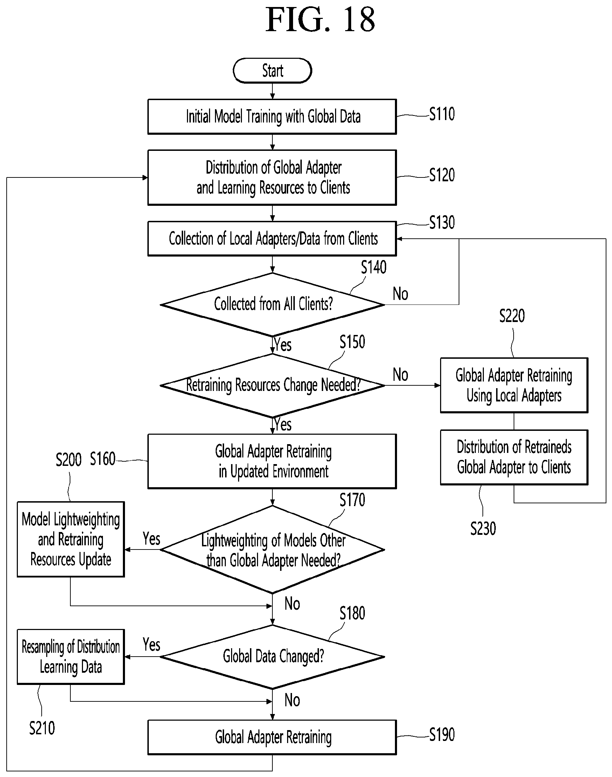

FIGS. 18 to 20 are drawings for explaining a federated learning method of a federated learning apparatus according to an embodiment of the present disclosure.

FIG. 18 is a flowchart for explaining a federated learning process of the server in the federated learning apparatus of the present disclosure.

As illustrated in FIG. 18, the server may initialize the neural network model of the server based on global data (S110).

And, the server may distribute the global adapter and learning resources to the client (S120).

Next, the server may collect local adapters and local data from the federated clients (S130).

Then, the server may check whether local adapters and local data have been collected from all federated clients (S140).

And, if local adapters and local data are collected from all federated clients, the server may check whether retraining resources need to be changed (S150).

Next, if retraining resources need to be changed, the server may retrain the global adapter based on the collected local adapters after updating the neural network model of the server based on the local adapters and local data of the client (S160).

Here, if retraining resources do not need to be changed, the server retrains only the second global adapter of the neural network model of the server based on the collected local adapters (S220), and may distribute the retrained global adapter to the federated clients (S230).

And, the server may check whether the neural network model excluding the retrained global adapter needs to be lightweighted (S170).

Then, if lightweighting of the neural network model is necessary, the server may generate a distribution lightweighted model corresponding to the retrained global adapter and update the retraining resources (S200).

Next, after the global adapter is retrained, the server may check whether pre-stored global data has changed (S180).

And, if the global data has changed, the server may select distribution source data corresponding to the retrained global adapter from the global data and update the retraining resources.

Here, if the global data has changed, the server resamples distribution learning data (S210), retrains the global adapter based on the resampled learning data (S190), and may distribute the retraining resources including the global adapter and at least one of the learning data and the lightweighted model to the federated clients (S120).

As described above, the server of the present disclosure selects a task corresponding to the multi modal features received from the clients based on the neural network model including the retrained global adapter, and may generate a task action corresponding to the selected task.

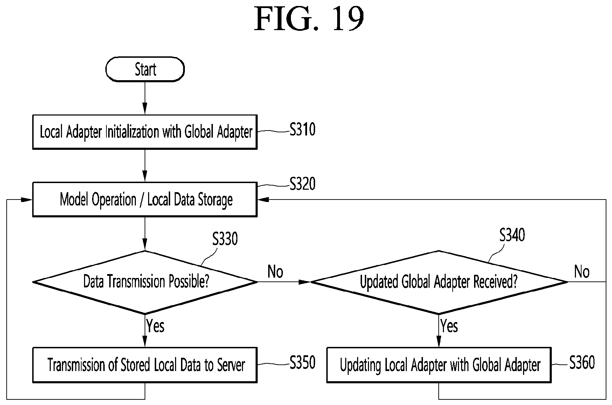

FIG. 19 is a flowchart for explaining a federated learning process of a client incapable of self-learning in the federated learning apparatus of the present disclosure.

As illustrated in FIG. 19, the client requests a global adapter from the server, and if the global adapter is received from the server, may initialize the local adapter of the client based on the global adapter of the server (S310).

And, the client operates the neural network model and may store local data corresponding to the operation of the neural network model (S320).

Next, the client may check whether transmission of local data is possible (S330).

Here, the client checks whether the stored local data satisfies a preset transmission condition, and if the preset transmission condition is satisfied, may transmit the local data to the server (S350).

As one example, when checking whether the preset transmission condition is satisfied, the client may check whether the preset transmission condition satisfies at least one of a condition for transmitting by a set period, a condition for transmitting by a set data amount, a condition for transmitting by data having set characteristics, and a condition for transmitting by a set communication state, but this is only one embodiment and is not limited thereto.

And, the client checks whether the retrained global adapter is received from the server (S340), and if the retrained global adapter of the server is received, may update the local adapter of the client based on the global adapter of the server (S360).

As described above, the client, when a task action is received from the server based on the neural network model including the updated local adapter, may execute a service corresponding to the task action and provide it to the user.

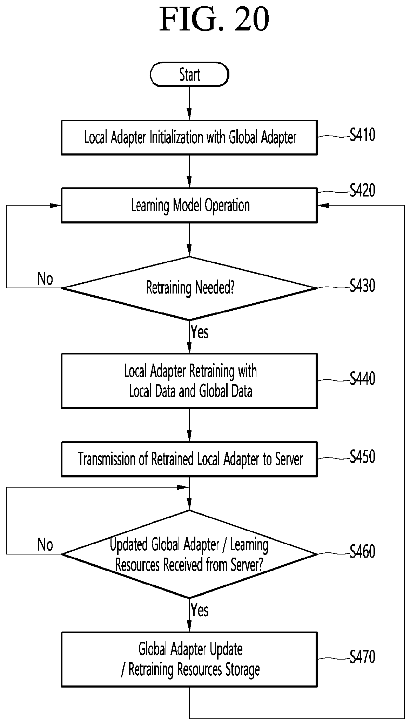

FIG. 20 is a flowchart for explaining a federated learning process of a client capable of self-learning in the federated learning apparatus of the present disclosure.

As illustrated in FIG. 20, the client requests a global adapter from the server, and if the global adapter is received from the server, may initialize the local adapter of the client based on the global adapter of the server (S410).

Next, the client operates the neural network model (S420) and may determine whether retraining of the local adapter of the neural network model is necessary (S430).

And, if it is determined that retraining of the local adapter is necessary, the client retrains the local adapter based on at least one of the local data of the client and the global data of the server (S440), and may transmit the retrained local adapter to the server (S450).

Then, the client checks whether the retrained global adapter of the server is received from the server (S460), and if the retrained global adapter of the server is received, may update the global adapter of the client based on the retrained global adapter of the server (S470).

Here, if the retrained global adapter and retraining resources are simultaneously received from the server, the client classifies the retrained global adapter and the retraining resources, stores the classified retraining resources, and at the same time, may update the global adapter of the client based on the retrained global adapter of the server.

In some cases, if the retrained global adapter and the retraining resources are received from the server at different times, the client may sequentially perform the process of storing the retraining resources classified according to the order of reception time and the process of updating the global adapter of the client based on the retrained global adapter of the server.

In another case, the client requests retraining resources from the server, and if retraining resources are received from the server, may store the retraining resources.

Here, the client may request retraining resources from the server each time the retrained global adapter is received from the server, or may request retraining resources from the server by a preset period.

As described above, when a task action is received from the server based on the neural network model including the retrained local adapter, the client may execute a service corresponding to the task action and provide it to the user.

The present disclosure can efficiently train neural network models of a server and clients so that both common characteristics in various real environments and individual unique characteristics are reflected, by training the local adapter of the client, retraining the global adapter of the server based on the trained local data, and distributing the retrained second global adapter to the client.

In addition, the present disclosure can train neural network models of each client and the global neural network model of the server to maintain alignment with each other, thereby improving task performance, by the server distributing the retrained second global adapter and retraining resources together to the client.

The present disclosure described above can be implemented as computer-readable code on a medium on which a program is recorded. The computer-readable medium includes all types of recording devices in which data readable by a computer system is stored. Examples of computer-readable media include HDD (Hard Disk Drive), SSD (Solid State Disk), SDD (Silicon Disk Drive), ROM, RAM, CD-ROM, magnetic tape, floppy disk, and optical data storage devices. In addition, the computer may include the processor 180 of the artificial intelligence device.

### [Industrial Applicability]

According to the federated learning apparatus according to the present disclosure, since there is an effect of being capable of efficiently training neural network models of a server and clients so that both common characteristics in various real environments and individual unique characteristics are reflected, industrial applicability is remarkable.

## Claims

1. A federated learning apparatus comprising:
at least one client configured to generate a multi modal feature based on a first neural network model including a first global adapter and a local adapter; and
a server configured to generate a task action corresponding to the multi modal feature based on a second neural network model including a second global adapter, and provide the task action to the client,
wherein the server is configured to:
collect the trained local adapter from the client,
retrain the second global adapter of the second neural network model based on the collected local adapter, and
distribute the retrained second global adapter to the client to update the first global adapter of the client with the retrained second global adapter.

2. The federated learning apparatus of claim 1, wherein the first neural network model comprises:
a pre-trained first foundation model;
a first global adapter in which common characteristics of the client are reflected; and
a local adapter in which unique characteristics of the client are reflected,
wherein the first global adapter is updated with the second global adapter distributed from the server, and
the local adapter is retrained based on at least one of local data of the client and global data of the server.

3. The federated learning apparatus of claim 1, wherein the client is configured to, when it is determined that self-learning for the local adapter is impossible, store local data corresponding to the operation of the first neural network model and transmit the local data to the server.

4. The federated learning apparatus of claim 3, wherein the client is configured to check whether the retrained second global adapter is received from the server, and, when the retrained second global adapter is received, update the local adapter based on the second global adapter.

5. The federated learning apparatus of claim 1, wherein the client is configured to, when it is determined that self-learning for the local adapter is possible, determine whether retraining of the local adapter of the first neural network model is necessary, and, when it is determined that retraining of the local adapter is necessary, retrain the local adapter based on at least one of the local data of the client and the global data of the server, and transmit the retrained local adapter to the server.

6. The federated learning apparatus of claim 5, wherein the client is configured to check whether the retrained second global adapter is received from the server, and, when the retrained second global adapter is received, update the first global adapter based on the retrained second global adapter.

7. The federated learning apparatus of claim 1, wherein the second neural network model comprises:
a pre-trained second foundation model; and
a second global adapter in which common characteristics of the federated clients are reflected,
wherein the second global adapter is retrained and updated based on a plurality of local adapters received from the federated clients.

8. The federated learning apparatus of claim 1, wherein the server is configured to, before acquiring multi modal features from the federated clients, initialize the second neural network model based on global data, and distribute the second global adapter and learning resources to the federated clients.

9. The federated learning apparatus of claim 8, wherein the server is configured to collect local adapters and local data from the federated clients, classify the collected local data and local data by client, check whether local adapters and local data have been collected from all the federated clients, and, when local adapters and local data are collected from all the federated clients, retrain the second global adapter based on the local adapters collected from the federated clients.

10. The federated learning apparatus of claim 9, wherein the server is configured to, when retraining the second global adapter and when local adapters of all the federated clients are collected, check whether retraining resources need to be changed, and, when the retraining resources need to be changed, retrain the second global adapter based on the collected local adapters after updating the second neural network model based on the local adapters and local data of the client.

11. The federated learning apparatus of claim 10, wherein the server is configured to, when the retraining resources do not need to be changed, retrain only the second global adapter of the second neural network model based on the collected local adapters, and distribute the retrained second global adapter to the federated clients.

12. The federated learning apparatus of claim 10, wherein the server is configured to check whether the second neural network model excluding the retrained second global adapter needs to be lightweighted, and, when lightweighting of the second neural network model is necessary, generate a distribution lightweighted model corresponding to the retrained second global adapter and update the retraining resources.

13. The federated learning apparatus of claim 10, wherein the server is configured to, after the second global adapter is retrained, check whether pre-stored global data has changed, and, when the global data has changed, select distribution source data corresponding to the retrained second global adapter from the global data and update the retraining resources.

14. The federated learning apparatus of claim 13, wherein the server is configured to, when the retraining resources are updated, check whether global data has changed, and, when the global data has changed, resample distribution learning data, retrain the second global adapter based on the resampled learning data, and distribute the retraining resources including the second global adapter and at least one of the learning data and the lightweighted model to the federated clients.

15. 16. A federated learning method of a federated learning apparatus including at least one client that generates a multi modal feature based on a first neural network model including a first global adapter and a local adapter, and a server that generates a task action corresponding to the multi modal feature based on a second neural network model including a second global adapter and provides the task action to the client, the method comprising:
retraining, by the client, the local adapter of the first neural network model based on at least one of local data and global data;
transmitting, by the client, the retrained local adapter to the server;
collecting, by the server, the retrained local adapter from the client;
retraining, by the server, the second global adapter of the second neural network model based on the collected local adapter;
distributing, by the server, the retrained second global adapter to the client;
receiving, by the client, the retrained second global adapter from the server; and
updating, by the client, the first global adapter of the first neural network model based on the retrained second global adapter.
